# EUROPEAN PATENT SPECIFICATION

(11) **EP 1 557 981 B1**
(45) Date of publication and mention of the grant of the patent: **30.11.2011**
(21) Application number: 05250220.0
(22) Date of filing: 17.01.2005
(51) Int. Cl.: H04L 12/26

(54) **Testing telecommunications networks**
Testen von Telekommunikations-Netzwerken
Tester un réseau de télécommunication

(30) Priority: 23.01.2004 GB 0401502
(43) Date of publication of application: 27.07.2005
(73) Proprietor: Vodafone Group PLC, Newbury Berkshire RG14 2FN (GB)
(72) Inventor: Sanders, David, Hungerford Berkshire RG17 OHP (GB); Howells, Michael David, Corsham Wiltshire SN13 9XQ (GB)
(74) Representative: Harries, Simon George

(56) References cited:
- WO-A-01/61921
- US-A- 5 668 800
- US-B1- 6 563 795

## Description

The present invention relates to a method of testing a telecommunications network having a plurality of elements between which data are transmitted, and to apparatus for testing such a telecommunications network.

US-A-5668800 discloses a system for determining the connection path that a data packet follows in a network. A test data packet is transmitted through the network. Each node or element in the network receives the test data packet and generates a response to an originating node or element. All the responses are analysed. It is determined whether any responses are missing - that is, it is determined whether the responses represent a continuous path between the originating node or element and the destination node or element. If no responses are missing it is determined whether or not any node or element response times are abnormal.

WO-A-01/61921 discloses a testing tool for ISP network engineers. The tool is said to be topology independent and not to have to be reconfigured as the network changes. The tool sends messages such as an HTTP ping or a TCP ping and then evaluates the response received (if any).

According to a first aspect of the present invention, there is provided a method as defined in claim 1.

According to a second aspect of the present invention, there is provided apparatus as defined in claim 9.

Embodiments of the present invention will now be described by way of example, with reference to the accompanying drawings, in which:
Figures 1A and 1B show the transmission of a picture from one mobile terminal to another mobile terminal;
Figure 2 shows a data packet for sending a picture;
Figure 3 shows a test data packet; and
Figure 4 is a flow chart showing the generation of a test data packet and the processing of that test data packet by an element of the telecommunications network.

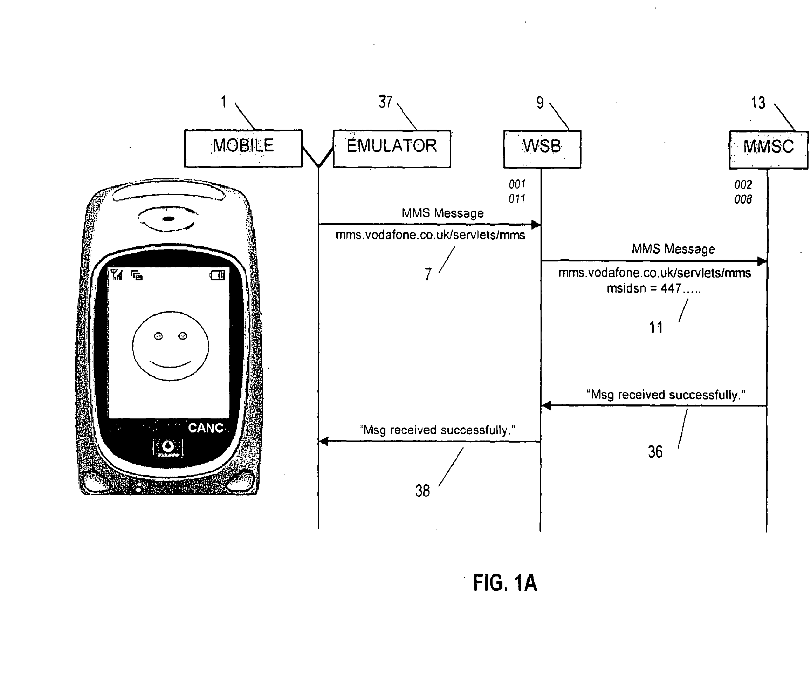

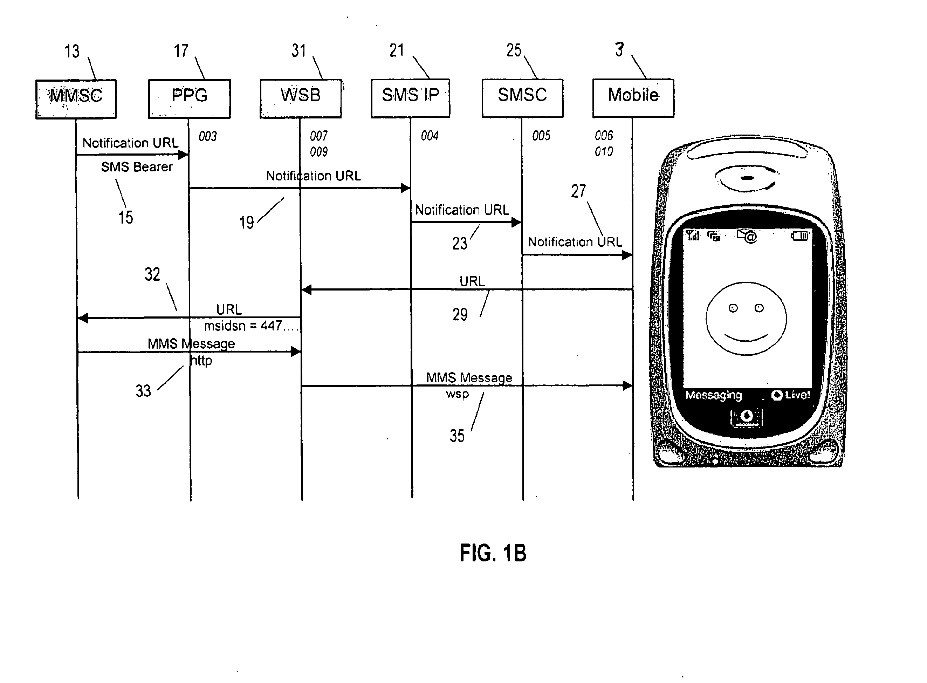

Figures 1A and 1B show a sending mobile terminal 1 and a receiving mobile terminal 3. An image is captured by the sending mobile terminal 1, and the user of that terminal wishes to transmit the image to the receiving mobile terminal 3. Both the mobile terminals 1 and 3 are multimedia message (MMS) enabled.

After capturing the image, the user of mobile terminal 1 identifies the mobile terminal 3 as the recipient using the graphical user interface for mobile terminal 1, and instructs the mobile terminal 1 to send the picture in the form of an MMS to the receiving mobile terminal 3.

The sending mobile terminal 1 then generates an MMS message 7 of appropriate format, which is transmitted to WAP gateway (WSB) 9. The received MMS message 7 is processed by WSB 9 and a further message 11 is generated by the WSB 9 and is sent to multimedia mobile service switching centre (MSC) 13. The MMSC 13 processes the received message 11 and generates a further message 15, which is sent to push proxy gateway (PPG) 17. The PPG 17 processes the received message 15 and generates a notification URL message 19, which is sent to short message service IP gateway (SMS IP) 21. The received notification URL message 19 is processed by the SMSIP 21 and the resultant notification URL message 23 is passed to short message service centre (SMSC) 25, which in turn processes the notification URL 23 and generates further notification URL message 27 and passes this to receiving mobile terminal 3.

On receipt of the notification URL message 27, the receiving mobile terminal 3 prompts the user of that mobile terminal that a picture message is available for downloading. By means of the graphical user interface of the receiving mobile terminal 3, the user indicates that they wish to receive the MMS. The mobile terminal 3 generates an appropriate URL message 29 and sends this to second WAP gateway (WSB) 31. WSB 31 generates URL message 32, which is transmitted to MMSC 13. MMSC 13 then generates a reply message 33 which is sent to the second WSB 31. WSB 31 processes the received message 33 and generates a further message 35, which is passed to receiving mobile terminal 3 and allows display of the picture associated with the MMS on the display of the mobile terminal 3. The MMSC 13 also generates an acknowledgement message 36, which is sent to the first WSB 9. This message is processed by WSB 9 and a further acknowledgement message 38 is sent to the mobile terminal 1.

What has been described above is the conventional mechanism for sending an MMS between two mobile terminals registered with a mobile telecommunications network (in this example a GSM telecommunications network).

It is known to compile data concerning the status of individual elements of a mobile telecommunications network using diagnostic systems such as TiMON and FACTS. Such existing diagnostic systems can provide useful information about individual elements of the mobile telecommunications system. However, such known diagnostic systems are not able to test whether a series of elements are operating correctly together, i.e. whether a correct end-to-end transmission and processing of data between and in a series of elements is performing properly.

According to an aspect of the embodiment, the functioning of a series of elements is tested by sending a test data packet to each of those elements.

The present invention is applicable to testing any series of elements in a mobile telecommunications network. In the embodiment described below in detail, the test data packet is for testing whether an MMS can be transmitted to mobile terminal 3.

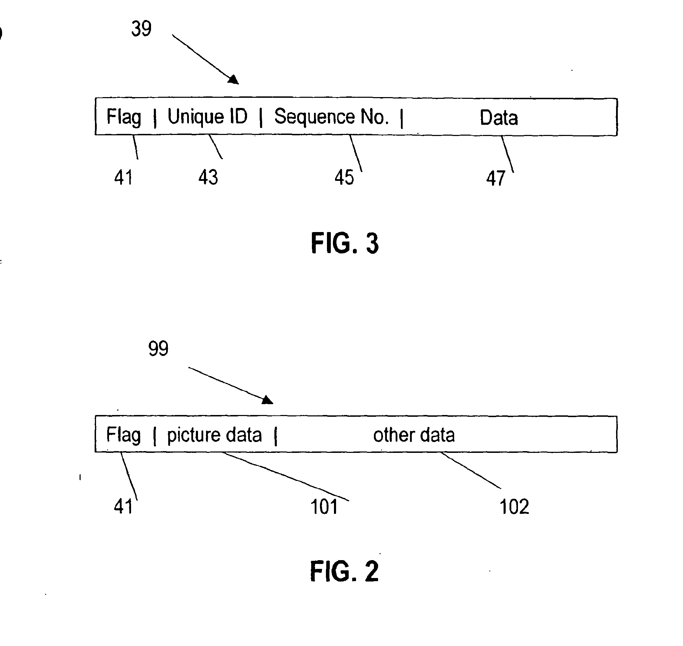

Figure 2 shows in general a "normal" MMS data packet 99 that would be generated by mobile terminal 1 in accordance with the embodiment. The data packet 99 includes a flag 41, picture data 101 and other data 102 (such as data used by the network for administrative purposes). The data 101 and 102 are the same as the content of a conventional MMS data packet. The flag 41 is, for example, a single bit having status "0" when the data packet 39 is a normal MMS.

A test data packet 39 (Figure 3) is generated by a mobile terminal emulator 37. The data packet 39 may be of the same general structure and form as the normal MMS message 99 - for example it may comprise the same number of bits. The data packet 39 includes the flag 41 which, in this example, is a single bit that would have value "0" if the data packet 39 were a conventional MMS and not a test data packet, but has the value "1" when the data packet 39 is a test data packet. The data packet 39 further comprises a unique identifier (ID) 43. This is an identifier which allows the test data packet 39 to be distinguished from all other data packets being transmitted through the mobile telecommunications network. The data packet 39 further comprises a sequence number 45, which indicates for which element within the mobile telecommunications network the test data packet 39 is destined.

In the present example the elements of the mobile telecommunications network of interest are the elements between which data is passed to transfer an MMS from the emulator 37 (or sending mobile 1) to receiving mobile 3 - that is, first WSB 9, MMSC 13, PPG 17, second WSB 31, SMS IP 21 and SMSC 25. Each of those elements has a different sequence number associated therewith (and some have more than one sequence number-as described below). The sequence number 43 of the test data packet 39 indicates for which of the elements the test data packet 39 is destined.

The test data packet 39 may also include other data 47 for use by the mobile telecommunications network.

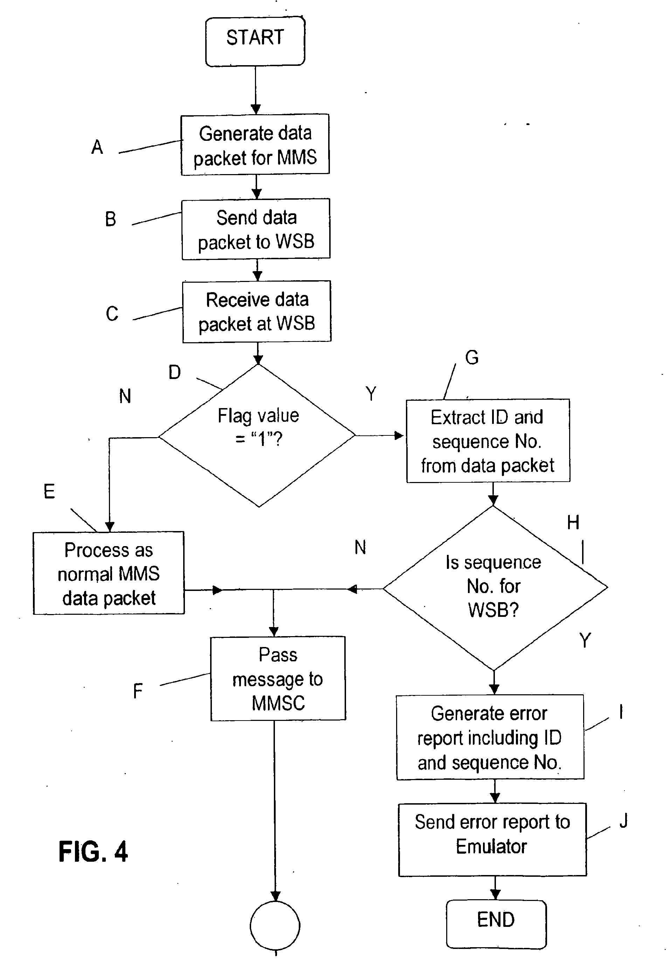

The manner in which the test data packet 39 is handled by the mobile telecommunications network will now be described with particular reference to the flow chart of Figure 4.

At step A the mobile terminal 1 generates a normal MMS data packet 99 or the emulator 37 generates a test data packet 39 for testing whether an MMS can be properly delivered to a receiving mobile terminal 3.

Initially, the processing of a conventional MMS message 99 will be described. The conventional MMS message has flag 41 set to the value "0". The data packet 99 is generated at step A. At step B this data packet 99 is transmitted from the sending mobile terminal 1 to the first WSB 9, and is received by the WSB 9 at step C. At step D the value of the flag 41 is determined. Because the data packet 99 is for a "normal" MMS, the data packet 99 is processed in the normal way at step E. A suitable message for sending to MMSC 13 is generated and passed to MMSC at step F. That message will be processed by the MMSC 13 and a further message 15 will be onwardly transmitted to PPG 17, in the manner described above in relation to Figure 1 but not shown in Figure 4 for the sake of brevity. The sequence of events then follows that shown in Figure 1 and will not be described further here.

On the other hand, if the data packet is a test data packet 39, the value of the flag 41 will be "1". After generation of a test data packet 39 (step A), steps B and C are performed as before. At step D it is determined that the flag has a value "1". The data packet 39 is then processed by the WSB 9 at step G to extract the unique identifier 43 and the sequence number 45. At step H it is determined whether the sequence number 45 extracted from the data packet 39 corresponds to a sequence number of WSB 9. For example, WSB 9 may be assigned sequence number "000 1 ". If the sequence number 45 of the data packet 39 is "0001" (that is, it matches the sequence number of the WSB 9), then it is determined that the data packet 39 is destined for the WSB 9.

If the sequence number 45 does not match the sequence number allocated for WSB 9, the data packet 39 is passed as a message to MMSC 13 at step F for onward transmission as described above in relation to Figure 1. The data packet will be processed by the element having a sequence number matching the sequence number of the test data packet 39.

If the sequence number 45 does match the sequence number allocated to WSB 9, a process in the WSB 9 is performed to generate an error report (step J). This error report can include any information that might be useful to the emulator 37 and the network in general. For example, the error report could include the current load of the WSB 9 (that is, what proportion of the WSB 9's capacity that is being used). The error report could also include the number of messages handled by the WSB 9 during a particular time period, and any malfunctions recorded. This information could have a format similar to that employed in TiMON or FACTS. The error report also includes unique identifier 43 and the sequence number 45 from the data packet 39. The error report is then sent to the emulator 37 at step J.

It should be understood from the above description of the flow chart of Figure 4 that a test data packet 39 will be passed sequentially between the elements that deal with a normal MMS in the same manner as a normal MMS. However, when the test data packet 39 reaches the element which has a sequence number corresponding to sequence number 45 of the test data packet 39, the test data packet 39 is not passed further upstream in the sequence of elements, but causes the generation of an error report as in steps I and J of the flow chart of Figure 4.

It can be seen from Figure 1 that the first WSB 9, the MMSC 13, the second WSB 18 and the receiving mobile terminal 3 receive a message twice during the transmission of an MMS. Such elements will have a different sequence number for each encounter with the message relating to the transmission of an MMS. In Figure 1 the sequence numbers of each element are indicated under each element in italics.

To fully test the elements required for sending an MMS, a test data packet 39 will be generated with each sequence number. The first WSB 9 will therefore receive two test data packets 39, the MMSC 13 will receive two data packets 39, the PPG 17 will receive one data packet 39, the second WSB 18 will receive two data packets 39, the SMS IP 21 will receive one data packet 39, the SMSC 25 will receive one data packet 39 and the receiving mobile terminal 3 will receive two data packets 39.

After all these data packets have been sent, receipt of error reports corresponding to each of the data packets is monitored by the emulator 37. Analysis of the error reports by the emulator 37, or the detection of the absence of an error report corresponding to one of the test data packets 39, allows a fault to be identified. Remedial action can then be taken.

Although the above description has been in relation to testing the sending of an MMS, it should be understood that the present invention is applicable to the testing of any elements within a telecommunications network.

Although a GSM telecommunications network is described, it should be appreciated that the invention is applicable to telecommunications networks in general. The invention can be employed in various mobile telecommunications networks such as, in addition to GSM, UMTS (3G), IS-95, etc.

In the embodiment described the test data packet 39 has the same general form and structure as a data packet used within the network for the purposes of transmitting data (an MMS in the embodiment).

In another embodiment the test data packet 39 does not pass from element to element in the same sequence as a normal data packet. The test data packet 39 may be passed directly by the emulator 37 to any or all destination elements, or via other intermediate elements in any order.

## Claims

1. A method of testing the ability of a telecommunications network to provide a service to a user, the network having a plurality of elements (9,13,17,21,25,31) between which data are transmitted, the method including generating a test data packet (39); transmitting the test data packet (39); receiving the test data packet (39) at one of the elements (9,13,17,21,25,31); and in that the test data packet (39) has the same general structure and/or form as a data packet (99) for providing the service to the user, such that the test data packet (39) is transmissible between the elements (9,13,17,21,25,31) in the same manner as a data packet (99) for providing the service to the user; and **characterised in that** the method includes determining in the element (9, 13, 17, 21, 25, 31) whether the data packet is a test data packet; and, if the data packet is a test data packet (39), generating response data indicative of the status of the element (9,13,17,21,25,31) wherein the response data includes at least one of indications of error conditions associated with the element (9,13,17,21,25,31), the number of messages handled by the element (9,13,17,21,25,31) during a particular time period, and an indication of the load on the element (9,13,17,21,25,31).

2. The method of claim 1, wherein the test data packet (39) includes a flag (41) for distinguishing the test data packet (39) from other data packets transmitted (99) between the elements (9,13,17,21,25,31), and wherein the determining step determines the presence of the flag (41).

3. The method of claim 1 or 2, wherein the test data packet (39) includes an identifier (43) for distinguishing that test data packet (39) from other test data packets.

4. The method of claim 1, including providing the test data packet (39) with an indicator field (45) which indicates by which of the elements (9,13,17,21,25,31) the data packet (39) is to be processed.

5. The method of claim 4, wherein the determining step analyses the indicator field (45) to determine whether the data packet is a test data packet (39) and for determining whether the test data packet (39) should be processed by the element (9,13,17,21,25,31), and wherein the generating step is only performed if the indicator field indicates (45) that the test data packet is for the element (9,13,17,21,25,31).

6. A method of any one of the preceding claims, wherein the test data packet (39) is generated by emulator means (37) and the test data packet (39) has a form or structure which emulates a data packet (39) generated normally in response to a user request.

7. The method of any one of the preceding claims, wherein the test data packet (39) is transferred sequentially between a plurality of the elements (9,13,17,21,25,31) until the test data packet reaches one of the elements (9,13,17,21,25,31) to be tested by the test data packet (39).

8. The method of claim 7, wherein the sequence of the elements (9,13,17,21,25,31) corresponds to the sequence of the elements (9,13,17,21,25,31) that a data packet (39) sequentially passes to in response to a normal user request to provide the service to the user.

9. Apparatus for testing the ability of a telecommunications network to provide a service to a user, the network having a plurality of elements (9,13,17,21,25,31) between which data are transmitted, the apparatus including means (37) operable to generate a test data packet (39); means for transmitting the test data packet (39); means for receiving the test data packet (39) at one of the elements (9,13,17,21,25,31); and in that the test data packet (39) has the same general structure and/or form as a data packet (99) for providing the service, such that the test data packet (39) is transmissible between the elements (9,13,17,21,25,31) in the same manner as a data packet (99) for providing the service to the user; and **characterised in that** the apparatus includes means for determining in the element (9,13,17,21,25,31) whether the data packet (39) is a test data packet (39); and
means for generating response data indicative of the status of the element (9,13,17,21,25,31) wherein the response data includes at least one of indications of error conditions associated with the element (9,13,17,21,25,31), the number of messages handled by the element (9,13,17,21,25,31) during a particular time period, and an indication of the load on the element (9,13,17,21,25,31).

10. The apparatus of claim 9, further including means for performing the method of any one of claims 1 to 8.

## Patentansprüche

1. Verfahren zum Testen der Fähigkeit eines Telekommunikationsnetzes, einem Benutzer einen Dienst bereitzustellen, wobei das Netzwerk mehrere Elemente (9, 13, 17, 21, 25, 31) aufweist, zwischen denen Daten übertragen werden, wobei das Verfahren Folgendes beinhaltet: Erzeugen eines Testdatenpakets (39); Übertragen des Testdatenpakets (39); Empfangen des Testdatenpakets (39) an einem der Elemente (9, 13, 17, 21, 25, 31); und **dadurch**, dass das Testdatenpaket (39) dieselbe allgemeine Struktur und/oder Form hat wie ein Datenpaket (99), um dem Benutzer den Dienst bereitzustellen, so dass das Testdatenpaket (39) zwischen Elementen (9, 13, 17, 21, 25, 31) auf dieselbe Weise übertragen werden kann wie ein Datenpaket (99), um dem Benutzer den Dienst bereitzustellen; und **dadurch gekennzeichnet, dass** das Verfahren Folgendes beinhaltet: Ermitteln in dem Element (9, 13, 17, 21, 25, 31), ob das Datenpaket ein Testdatenpaket ist; und, wenn das Datenpaket ein Testdatenpaket (39) ist, Erzeugen von Antwortdaten, die den Status des Elements (9, 13, 17, 21, 25, 31) anzeigen, wobei die Antwortdaten Anzeigen von Fehlerzuständen in Verbindung mit dem Element (9, 13, 17, 21, 25, 31), die Anzahl der von dem Element (9, 13, 17, 21, 25, 31) während einer bestimmten Zeitperiode gehandhabten Nachrichten und/oder die Anzeige der Belastung des Elements (9, 13, 17, 21, 25, 31) beinhalten.

2. Verfahren nach Anspruch 1, wobei das Testdatenpaket (39) einen Flag (41) zum Unterscheiden des Testdatenpakets (39) von anderen zwischen den Elementen (9, 13, 17, 21, 25, 31) übertragenen (99) Datenpaketen beinhaltet, und wobei in dem Ermittlungsschritt die Anwesenheit des Flags (41) ermittelt wird.

3. Verfahren nach Anspruch 1 oder 2, wobei das Testdatenpaket (39) eine Kennung (43) zum Unterscheiden dieses Testdatenpakets (39) von anderen Testdatenpaketen beinhaltet.

4. Verfahren nach Anspruch 1, bei dem das Testdatenpaket (39) mit einem Indikatorfeld (45) versehen wird, das anzeigt, mit welchem der Elemente (9, 13, 17, 21, 25, 31) das Datenpaket (39) verarbeitet werden soll.

5. Verfahren nach Anspruch 4, wobei in dem Ermittlungsschritt das Indikatorfeld (45) analysiert wird, um zu ermitteln, ob das Datenpaket ein Testdatenpaket (39) ist, und um zu ermitteln, ob das Testdatenpaket (39) von dem Element (9, 13, 17, 21, 25, 31) verarbeitet werden soll, und wobei der Erzeugungsschritt nur dann durchgeführt wird, wenn das Indikatorfeld anzeigt (45), dass das Testdatenpaket für das Element (9, 13, 17, 21, 25, 31) ist.

6. Verfahren nach einem der vorherigen Ansprüche, wobei das Testdatenpaket (39) von Emulatormitteln (37) erzeugt wird und das Testdatenpaket (39) eine Form oder Struktur hat, die ein normalerweise als Reaktion auf eine Benutzeranforderung erzeuges Datenpaket (39) emuliert.

7. Verfahren nach einem der vorherigen Ansprüche, wobei das Testdatenpaket (39) sequentiell zwischen mehreren Elementen (9, 13, 17, 21, 25, 31) übertragen wird, bis das Testdatenpaket eines der Elemente (9, 13, 17, 21, 25, 31) erreicht, das von dem Testdatenpaket (39) getestet werden soll.

8. Verfahren nach Anspruch 7, wobei die Folge der Elemente (9, 13, 17, 21, 25, 31) der Folge der Elemente (9, 13, 17, 21, 25, 31) entspricht, zu denen ein Datenpaket (39) sequentiell als Reaktion auf eine normale Benutzeranforderung passiert, um dem Benutzer den Dienst bereitzustellen.

9. Vorrichtung zum Testen der Fähigkeit eines Telekommunikationsnetzes, einem Benutzer einen Dienst bereitzustellen, wobei das Netzwerk mehrere Elemente (9, 13, 17, 21, 25, 31) aufweist, zwischen denen Daten übertragen werden, wobei die Vorrichtung Folgendes umfasst: Mittel (37) zum Erzeugen eines Testdatenpakets (39); Mittel zum Übertragen des Testdatenpakets (39); Mittel zum Empfangen des Testdatenpakets (39) an einem der Elemente (9, 13, 17, 21, 25, 31); und **dadurch**, dass das Testdatenpaket (39) dieselbe allgemeine Struktur und/oder Form hat wie ein Datenpaket (99) zum Bereitstellen des Dienstes, so dass das Testdatenpaket (39) zwischen den Elementen (9, 13, 17, 21, 25, 31) auf dieselbe Weise übertragen werden kann wie ein Datenpaket (99), um dem Benutzer den Dienst bereitzustellen; und **dadurch gekennzeichnet, dass** die Vorrichtung Mittel zum Ermitteln in dem Element (9, 13, 17, 21, 25, 31) beinhaltet, ob das Datenpaket (39) ein Testdatenpaket (39) ist; und Mittel zum Erzeugen von Antwortdaten, die den Status des Elementes (9, 13, 17, 21, 25, 31) anzeigen, wobei die Antwortdaten Anzeigen von Fehlerzuständen in Verbindung mit dem Element (9, 13, 17, 21, 25, 31), die Anzahl von von dem Element (9, 13, 17, 21, 25, 31) während einer bestimmten Zeitperiode gehandhabten Nachrichten und/oder eine Anzeige der Belastung des Elements (9, 13, 17, 21, 25, 31) beinhalten.

10. Vorrichtung nach Anspruch 9, die ferner Mittel zum Ausführen des Verfahrens nach einem der Ansprüche 1 bis 8 umfasst.

## Revendications

1. Procédé destiné à tester l'aptitude d'un réseau de télécommunications à fournir un service à un utilisateur, le réseau possédant une pluralité d'éléments (9, 13, 17, 21, 25, 31) entre lesquels des données sont transmises, le procédé englobant les opérations consistant à générer un paquet de données d'essai (39) ; à transmettre le paquet de données d'essai (39) ; à recevoir le paquet de données d'essai (39) au niveau de l'un des éléments (9, 13, 17, 21, 25, 31) ; et le paquet de données d'essai (39) présentant la même structure et/ou forme générale qu'un paquet de données (99) destiné à fournir le service à l'utilisateur, de sorte que le paquet de données d'essai (39) est transmissible entre les éléments (9, 13, 17, 21, 25, 31) de la même manière qu'un paquet de données (99) destiné à fournir le service à l'utilisateur ; et **caractérisé en ce que** le procédé englobe l'opération consistant à déterminer dans l'élément (9, 13, 17, 21, 25, 31) si le paquet de données est un paquet de données d'essai ou non ; et, si le paquet de données est effectivement un paquet de données d'essai (39), à générer des données de réponse indiquant l'état de l'élément (9, 13, 17, 21, 25, 31), cas dans lequel les données de réponse comportent au moins l'un des postes suivants, à savoir les indications d'état d'erreur associées à l'élément (9, 13, 17, 21, 25, 31), le nombre de messages pris en charge par l'élément (9, 13, 17, 21, 25, 31) pendant un intervalle de temps spécifique, et une indication de la charge présente sur l'élément (9, 13, 17, 21, 25, 31).

2. Procédé selon la revendication 1, le paquet de données d'essai (39) comportant un fanion (41) pour permettre de distinguer le paquet de données d'essai (39) par rapport à d'autres paquets de données transmis (99) entre les éléments (9, 13, 17, 21, 25, 31), et cas dans lequel l'étape de détermination détermine la présence du fanion (41).

3. Procédé selon la revendication 1 ou 2, le paquet de données d'essai (39) englobant un identifiant (43) pour distinguer ce paquet de données d'essai (39) par rapport à d'autres paquets de données d'essai.

4. Procédé selon la revendication 1, comportant l'opération consistant à munir le paquet de données d'essai (39) d'un champ d'indication (45) qui indique lequel des éléments (9, 13, 17, 21, 25, 31) devra se charger d'effectuer le traitement du paquet de données (39).

5. Procédé selon la revendication 4, l'étape de détermination analysant le champ d'indication (45) pour déterminer si le paquet de données est un paquet de données d'essai (39) et pour déterminer si le paquet de données d'essai (39) devrait être traité par l'élément (9, 13, 17, 21, 25, 31), et cas dans lequel l'étape de génération est uniquement réalisée si le champ d'indication indique (45) que le paquet de données d'essai est destiné à l'élément (9, 13, 17, 21, 25, 31).

6. Procédé selon l'une quelconque des revendications précédentes, le paquet de données d'essai (39) étant généré par des moyens émulateurs (37) et le paquet de données d'essai (39) ayant une forme ou une structure qui émule un paquet de données (39) lequel est normalement généré en réponse à une requête d'utilisateur.

7. Procédé selon l'une quelconque des revendications précédentes, le paquet de données d'essai (39) étant transféré de façon séquentielle entre une pluralité des éléments (9, 13, 17, 21, 25, 31) jusqu'à ce que le paquet de données d'essai atteigne l'un des éléments (9, 13, 17, 21, 25, 31) devant être testé par le paquet de données d'essai (39).

8. Procédé selon la revendication 7, la séquence des éléments (9, 13, 17, 21, 25, 31) correspondant à la séquence des éléments (9, 13, 17, 21, 25, 31) vers laquelle passe de façon séquentielle un paquet de données (39) en réponse à une requête normale d'un utilisateur pour fournir le service à l'utilisateur.

9. Appareil servant à tester l'aptitude d'un réseau de télécommunications à fournir un service à un utilisateur, le réseau possédant une pluralité d'éléments (9, 13, 17, 21, 25, 31) entre lesquels des données sont transmises, l'appareil comportant des moyens (37) exploitables pour générer un paquet de données d'essai (39) ; des moyens pour transmettre le paquet de données d'essai (39) ; des moyens pour recevoir le paquet de données d'essai (39) au niveau de l'un des éléments (9, 13, 17, 21, 25, 31) ; et le paquet de données d'essai (39) présentant la même structure et/ou forme générale qu'un paquet de données (99) destiné à fournir le service, de sorte que le paquet de données d'essai (39) est transmissible entre les éléments (9, 13, 17, 21, 25, 31) de la même manière qu'un paquet de données (99) destiné à fournir le service à l'utilisateur ; et **caractérisé en ce que** l'appareil englobe des moyens pour déterminer dans l'élément (9, 13, 17, 21, 25, 31) si le paquet de données (39) est un paquet de données d'essai (39) ou non ; et des moyens pour générer des données de réponse indiquant l'état de l'élément (9, 13, 17, 21, 25, 31), cas dans lequel les données de réponse comportent au moins l'un des postes suivants, à savoir les indications d'état d'erreur associées à l'élément (9, 13, 17, 21, 25, 31), le nombre de messages pris en charge par l'élément (9, 13, 17, 21, 25, 31) pendant un intervalle de temps spécifique, et une indication de la charge présente sur l'élément (9, 13, 17, 21, 25, 31).

10. Appareil selon la revendication 9, comportant en outre des moyens pour exécuter le procédé selon l'une quelconque des revendications 1 à 8.
